**Europäisches Patentamt**

**European Patent Office**

**Office européen des brevets**

(19)

(11) **EP 1 467 577 A1**

(12) **EUROPEAN PATENT APPLICATION**
published in accordance with Art. 158(3) EPC

(43) Date of publication:
**13.10.2004 Bulletin 2004/42**

(51) Int Cl.⁷: $H04Q\ 7/22$

(21) Application number: **01995041.9**

(86) International application number:
**PCT/JP2001/011648**

(22) Date of filing: **28.12.2001**

(87) International publication number:
**WO 2003/061310 (24.07.2003 Gazette 2003/30)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Nokia Corporation**
**02150 Espoo (FI)**

(72) Inventor: **Kashima, Tsuyoshi**
**Yokohama-shi, Kanagawa 221-0075 (JP)**

(74) Representative: **Slingsby, Philip Roy et al**
**Page White & Farrer**
**54 Doughty Street**
**London WC1N 2LS (GB)**

(54) **NODE SELECTING METHOD**

(57) A node selecting method in which a mobile node moving among a plurality of nodes substantially uniformly dispersedly arranged selects a candidate node for next communication, is characterized in that the mobile node executes a first step of specifying nodes present within the communication zone of the mobile node; a second step of counting the number of overlaps between the communication zone of the specified node and the communication zones of the other specified nodes for each specified node; and a third step of selecting, as the candidate node for communication, a specified node in which the largest number has been counted.

FIG.2

EP 1 467 577 A1

**Description**

Technical Field

The present invention relates to a node selecting method, and more particularly, it relates to a node selecting method that a mobile node moving among nodes substantially uniformly dispersedly arranged can suitably be used to select a node which should communicate next to the node currently in communication.

Background Art

In recent years, low-cost, low-power, and short-distance wireless devices such as Bluetooth have been widely used in various fields. In many existing systems such as a cellular wireless telephone system, a received signal strength indicator (RSSI) is used for detecting a mobile and for handing over. However, the use of such an RSSI for a wireless device as described above is not always suitable because the use of the RSSI may bring about complication of an electric circuit or an increase in manufacture cost.

By way of example, in a cellular wireless telephone system, a case will be considered wherein a mobile (hereinafter referred to as mobile node) moves among base stations (hereinafter each simply referred to as node) substantially uniformly dispersedly arranged. When the mobile node moves, the distance between the mobile node and each node changes. Attendant upon this, the strength of the signal that the mobile node is receiving from each node also changes accordingly.

Generally, such a mobile node measures at predetermined timings the strength of the signal being received from each node. If the strength of the signal being received from the node that the mobile node is currently connected to and in communication with has weakened, the mobile node performs a handing-over operation for changing the connection node into a node the signal from which is strong. An algorithm for the handing-over operation is required.

When timings for handing over are determined, the ping-pong effect must be taken into consideration.

In general, when the mobile node moves near a boundary where the wireless communication zones of two nodes overlap each other, the strengths of the signals being received from the two nodes frequently change in the manner that the signal from one node becomes stronger than the signal from the other node, and vice versa. As a result, the mobile node unnecessarily switches the connections to the two nodes. This is called the ping-pong effect. This ping-pong effect causes problems of communication error, an increase in power consumption, etc.

Disclosure of the Invention

The present invention has been made for solving the above-described problems of the background art, and relates to a node selecting method. The present invention provides an algorithm that makes it possible to select a node without using any RSSI.

A first aspect of the present invention is directed to a node selecting method in which a mobile node moving among a plurality of nodes substantially uniformly dispersedly arranged selects a candidate node for next communication, characterized in that the mobile node executes a first step of specifying nodes present within a communication zone of the mobile node; a second step of counting the number of overlaps between a communication zone of the specified node and communication zones of the other specified nodes for each specified node; and a third step of selecting, as the candidate node for communication, the specified node in which the largest number has been counted.

A second aspect of the present invention is directed to a node selecting method in which a mobile node moving among a plurality of nodes substantially uniformly dispersedly arranged selects a candidate node for next communication, characterized in that the mobile node executes a first step of specifying a neighbor node present within a communication zone of the mobile node; a second step of specifying a neighbor node present within a communication zone of the neighbor node; a third step of counting the number of specifications in the first and second steps for each neighbor node; and a fourth step of selecting, as the candidate node for communication, the neighbor node in which the number of the specifications in a predetermined order is large.

A third aspect of the present invention is directed to the above node selecting method characterized in that the selection is not performed, if the specified node in which the largest number has been counted is the same as a node with which the mobile node is currently in communication.

A fourth aspect of the present invention is directed to the above node selecting method characterized in that when there are a plurality of specified nodes in which the largest number has been counted, an arbitrary one node is selected.

A fifth aspect of the present invention is directed to the above node selecting method characterized in that the mobile node executes the first to third steps at predetermined periods.

A sixth aspect of the present invention is directed to the above node selecting method characterized in that the predetermined period is changed in accordance with a movement speed of the mobile node.

A seventh aspect of the present invention is directed to the above node selecting method characterized in that the predetermined period is changed in accordance with an arrangement density of the plurality of nodes.

Brief Description of the Drawings

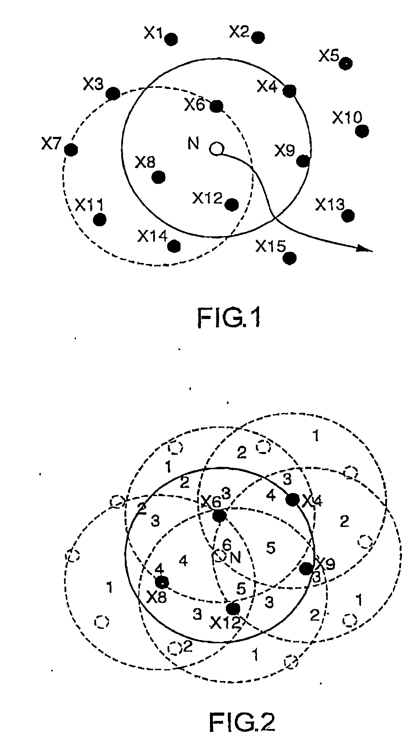

FIG. 1 is a representation for explaining an overlap between the communication zone of a mobile node N moving among a plurality of nodes substantially uniformly dispersedly arranged and the communication zone of a node X8; and FIG. 2 is a representation for explaining overlaps between communication zones.

Best Mode for Carrying out the Invention

Using a maximum likelihood optimum algorithm adopted in the present invention, a mobile node N can select, with using no RSSI, a node that is within the communication zone of the mobile node N and has high possibility of being the most adjacent to the mobile node N.

The maximum likelihood optimum algorithm of the present invention can be suitably used for a low-cost, low-power, and short-distance network such as Bluetooth. However, the present invention is not limited to that. The present invention is applicable also to a cellular system network or a PHS system network.

Further, nodes may be arranged fixedly or in the manner of being movable relatively to one another.

That is, the algorithm of the present invention is generally applicable to an access point network involving a mobile node, and an mobile ad-hoc network (MANET) wherein any node can move.

In the below embodiment, a case wherein nodes are fixedly arranged will be described for convenience' sake. It is, however, needless to say that the present invention is applicable also to a case wherein nodes are moving relatively to one another.

FIG. 1 shows a state wherein a mobile node N is moving among nodes X1, X2, ..., X14, and X15 substantially uniformly dispersedly arranged.

The communication zone of the mobile node N within which the mobile node N can communicate is shown by a solid line, and the communication zone of a node X8 is shown by a broken line. In this example, every node has a communication zone of the same radius, and has a function of detecting a list of nodes present within the communication zone of the node. Here, the nodes present within the communication zone of each node are called a neighbor node list (NNL) of the node. The NNL includes the node itself that has the NNL (the list of the nodes present within the communication zone of each node is called an NNL of the node).

In the case shown in FIG. 1, the NNL of the mobile node N is constituted by N, X4, X6, X8, X9, and X12, and the NNL of the node X8 is constituted by X8, N, X3, X6, X7, X11, X12, and X14. Here, the NNL of each of the nodes X4, X6, X8, X9, and X12 belonging to the NNL of the mobile node N is called a next NNL (NNNL).

Although it is preferable that the nodes are uniformly arranged, slight non-uniformity may be allowed. The degree of allowable non-uniformity depends on other network conditions. Therefore, although the node arrangement must be determined in consideration of network parameters of the network arrangement to be exact, the present invention can be applied to an existing access point network or mobile ad-hoc network (MANET) without hindrance.

If the mobile node and each node have functions of inquiring NNLs or NNNLs and collecting them, the present invention can be applied to such a network with no problem.

Based on FIG. 1, the NNL of the mobile node N and the NNNL of the mobile node N on the node X8 are represented as follows:

$$\text{NNL of the node N = N, X4, X6, X8, X9, X12} \tag{1}$$

$$\text{NNNL of the node N on X8 = X8, N, X3, X6, X7, X11,}$$

$$\text{X12, X14} \tag{2}$$

Next, a method of selecting a node by the algorithm of the present invention will be described.

As a candidate node that the mobile node N should next communicate with, the node nearest to the mobile node N is selected.

(1) The mobile node prepares an NNL.
(2) The mobile node acquires an NNNL from each of the nodes included in the NNL (hereinafter referred to as neighbor nodes).

(3) The mobile node counts the number of appearances (hereinafter referred to as appearance number) of every node included in the NNL, in the NNL and all NNNLs.

(4) In that case, the appearance number of each neighbor node is equal to the number of overlaps between the communication zones of all nodes included in the NNL (see FIG. 2).

FIG. 2 is a representation for explaining overlaps between communication zones in the positional relation of the nodes shown in FIG. 1.

FIG. 2 shows the number of overlaps between communication zones, of each of the specified nodes N, X4, X6, X8, X9, and X12.

The number of overlapping communication zones of the specified nodes X4, X6, X8, X9, and X12 other than the mobile node N is four in case of the node X4, five in case of the node X6, four in case of the node X8, four in case of the node X9, and four in case of the node X12.

The node N is always the node present within the region of the largest number of overlaps. The number of overlaps has a tendency to decrease outward from the region. Thus, as a general rule, the node present within the region of the largest number of overlaps, other than the node N, is supposed to be the nearest node.

Therefore, the node in which the largest number has been counted is selected as a candidate node to next communicate with. In the above-described example, the node X6 is selected as a candidate node for the mobile node N.

If there are a plurality of specified nodes in which the largest number has been counted, two choices are possible. If one of the plurality of specified nodes is the same as the node being in communication, it is in general efficient to keep the communication with the current node without selecting another node because the number of handing-over operations become small. If not, the mobile node N can select arbitrary one out of the plurality of nodes.

The selection of the candidate node by the mobile node N is performed at constant periods. The period can be adequately changed in accordance with the movement speed of the mobile node N and the arrangement density of nodes. In case that the movement speed is high or the arrangement density of nodes is high, the period is shortened.

Next, in case that each node is moving, to keep the communication connection by handing over, each node requires information on the arrangement state of the other nodes and the movement speed of the node itself.

For convenience sake, those are referred to as arrangement information and movement information. Movement of a node changes the NNL of the node and the change in the NNL is obtained as movement information. Although arrangement information can not obtained directly from the NNL, the node can obtain rough arrangement information by a two-step procedure using an NNNL.

As apparent from FIG. 2, the number of overlaps between a node and the other nodes belonging to the NNL of the mobile node N is smaller the father the node is from the mobile node N. Therefore, each node can obtain rough information on distance between nodes (arrangement information) from the appearance numbers of the nodes in the NNL of that node.

When the algorithm adopted in the present invention is used for handing over, it brings about a desirable effect. In general, if changeover for handing over is performed under a single boundary condition, the above-described ping-pong effect arises. In the present invention, however, because two boundary conditions are used, the ping-pong effect can be avoided.

A first boundary condition is whether or not the node belongs to the NNL. A second boundary condition is whether or not the node belongs to a maximum likelihood group.

Next, in case that the node density is high, because the nodes to be encountered by the mobile node N increases, the algorithm of the present invention may be somewhat changed. Under such conditions, because the number of handing-over operations increases, even when a node in which the largest number has been counted is detected, determination of handing over may be delayed. This is because the mobile node N can communicate with keeping the connection even when the mobile node N selects, as a candidate node, not the node in which the largest number has been counted, but a node in which the second or third largest number has been counted.

Industrial Applicability

The present invention is applicable to an access point network in which nodes are fixedly arranged, and a mobile ad-hoc network in which nodes are moving relatively to one another.

**Claims**

1. A node selecting method in which a mobile node moving among a plurality of nodes substantially uniformly dispersedly arranged selects a candidate node for next communication, **characterized in that** the mobile node executes:

a first step of specifying nodes present within a communication zone of the mobile node;
a second step of counting the number of overlaps between a communication zone of the specified node and communication zones of the other specified nodes for each specified node; and
a third step of selecting, as the candidate node for communication, the specified node in which the largest number has been counted.

2.  A node selecting method in which a mobile node moving among a plurality of nodes substantially uniformly dispersedly arranged selects a candidate node for next communication, **characterized in that** the mobile node executes:

a first step of specifying a neighbor node present within a communication zone of the mobile node;
a second step of specifying a neighbor node present within a communication zone of the neighbor node;
a third step of counting the number of specifications in the first and second steps for each neighbor node; and
a fourth step of selecting, as the candidate node for communication, the neighbor node in which the number of the specifications in a predetermined order is large.

3.  The node selecting method according to claim 1 or 2, **characterized in that** the selection is not performed, if the specified node in which the largest number has been counted is the same as a node with which the mobile node is currently in communication.

4.  The node selecting method according to claim 3, **characterized in that** when there are a plurality of specified nodes in which the largest number has been counted, an arbitrary one node is selected.

5.  The node selecting method according to claim 1, **characterized in that** the mobile node executes the first to third steps at predetermined periods.

6.  The node selecting method according to claim 2, **characterized in that** the mobile node executes the first to fourth steps at predetermined periods.

7.  The node selecting method according to claim 5 or 6, **characterized in that** the predetermined period is changed in accordance with a movement speed of the mobile node.

8.  The node selecting method according to claim 5 or 6, **characterized in that** the predetermined period is changed in accordance with an arrangement density of the plurality of nodes.

FIG.1

FIG.2

## INTERNATIONAL SEARCH REPORT

| International application No. |
| --- |
| PCT/JP01/11648 |

**A. CLASSIFICATION OF SUBJECT MATTER**
Int.Cl⁷ H04Q7/22

According to International Patent Classification (IPC) or to both national classification and IPC

**B. FIELDS SEARCHED**

Minimum documentation searched (classification system followed by classification symbols)
Int.Cl⁷ H04Q7/00-7/38, H04L12/28, 300-12/28, 310

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 9-252480 A  (Toshiba Corp.),<br>22 September, 1997 (22.09.97),<br>(Family: none) | 1-8 |
| A | JP 11-187450 A  (Matsushita Electric Industrial Co.,<br>Ltd.),<br>09 July, 1999 (09.07.99),<br>& EP 0924868 A1        & CA 2255323 A1<br>& CN 1226127 A        & US 6044104 A<br>& KR 99063199 A       & MX 9810565 A1 | 1-8 |

☐ Further documents are listed in the continuation of Box C.   ☐ See patent family annex.

| | |
| --- | --- |
| *     Special categories of cited documents:<br>"A"   document defining the general state of the art which is not<br>      considered to be of particular relevance<br>"E"   earlier document but published on or after the international filing<br>      date<br>"L"   document which may throw doubts on priority claim(s) or which is<br>      cited to establish the publication date of another citation or other<br>      special reason (as specified)<br>"O"   document referring to an oral disclosure, use, exhibition or other<br>      means<br>"P"   document published prior to the international filing date but later<br>      than the priority date claimed | "T"   later document published after the international filing date or<br>      priority date and not in conflict with the application but cited to<br>      understand the principle or theory underlying the invention<br>"X"   document of particular relevance; the claimed invention cannot be<br>      considered novel or cannot be considered to involve an inventive<br>      step when the document is taken alone<br>"Y"   document of particular relevance; the claimed invention cannot be<br>      considered to involve an inventive step when the document is<br>      combined with one or more other such documents, such<br>      combination being obvious to a person skilled in the art<br>"&"   document member of the same patent family |
| Date of the actual completion of the international search<br>    03 April, 2002 (03.04.02) | Date of mailing of the international search report<br>    16 April, 2002 (16.04.02) |
| Name and mailing address of the ISA/<br>    Japanese Patent Office | Authorized officer |
| Facsimile No. | Telephone No. |

Form PCT/ISA/210 (second sheet) (July 1998)